# EUROPÄISCHE PATENTSCHRIFT

(11) **EP 2 248 504 B1**
(45) Veröffentlichungstag und Bekanntmachung des Hinweises auf die Patenterteilung: **06.11.2013**
(21) Anmeldenummer: 09159613.0
(22) Anmeldetag: 07.05.2009
(51) Int. Cl.: A61G 12/00, H02G 3/04, A61G 13/00

(54) **Medizinische Versorgungseinheit mit Einbaumodulen**
Medical supply unit with built-in modules
Unité d'alimentation médicale dotée de modules encastrables

(43) Veröffentlichungstag der Anmeldung: 10.11.2010
(73) Patentinhaber: TRUMPF Medizin Systeme GmbH + Co. KG, 07318 Saalfeld (DE)
(72) Erfinder: Bauer, Georg, 85221, Dachau (DE); Brunner, Jürgen, 82335, Berg (DE); Holz, Eberhard, 72076, Tübingen (DE); Weisheit, Thomas, 80995, München (DE)
(74) Vertreter: Prüfer & Partner GbR European Patent Attorneys

(56) Entgegenhaltungen:
- EP-A- 0 401 556
- EP-A- 2 058 911
- WO-A-00/05530
- DE-U1- 29 617 895
- FR-A- 2 614 736

## Beschreibung

Die Erfindung betrifft eine medizinische Versorgungseinheit mit Einbaumodulen. Insbesondere betrifft die Erfindung eine medizinische Versorgungseinheit mit Einbaumodulen, die ohne Werkzeug montierbar und in einem vorbestimmten Raster an beliebigen Stellen montierbar sind.

Im medizinischen Bereich, insbesondere in der Intensivmedizin oder in der Chirurgie ist es erforderlich, eine Vielzahl elektrischer und elektronischer medizinischer Apparate gemeinsam in einem räumlichen Bereich zu betreiben und so anzuordnen, dass sie sich einerseits nahe am Patienten befinden, aber andererseits den Zugang zum Patienten nicht behindern. Dies erfordert in der Regel eine gewisse Mobilität dieser Apparate sowie eine Flexibilität der Anbringungsmöglichkeiten an einer medizinischen Versorgungseinheit.

Im Hinblick auf die hygienischen Anforderungen ist es anzustreben, die Leitungen zwischen den Anschlüssen an der medizinischen Versorgungseinheit und den medizinischen Apparaten möglichst kurz zu gestalten. Daher ist es wünschenswert, dass sich Datenanschlussstellen und die Entnahmestellen, nämlich Elektrosteckdosen oder Gassteckdosen in der Nähe der jeweiligen Geräte befinden, um die Leitungslängen möglichst kurz zu gestalten. Bei einer Veränderung der Konfiguration oder der Positionierung der medizinischen Apparate ist es daher auch vorteilhaft, die Entnahmestellen so anzuordnen, dass sie räumlich günstig, nämlich in geringem Abstand zu den medizinischen Apparaten angeordnet sind.

Aus hygienischen Gründen ist es weiterhin anzustreben, dass keine Befestigungsmittel, wie z. B. Schrauben, von außen sichtbar sind, da dies die Möglichkeit zur Reinigung beeinträchtigt, und zusätzliche Spalte und Öffnungen damit geschaffen werden, in denen sich Krankheitserreger festsetzen können.

Für eine wirtschaftliche Montage der medizinischen Versorgungseinheiten ist es anzustreben, möglichst standardisierte Module einzusetzen, die dann ohne Verwendung von Werkzeugen in der medizinischen Versorgungseinheit montiert werden können. Die Demontage der Module darf jedoch aus Sicherheitsgründen nur mit Hilfe von Werkzeug ermöglicht werden.

Aus dem Stand der Technik sind medizinische Versorgungseinheiten, z. B. Deckenversorgungseinheiten, bekannt, die einen oder mehrere Träger für Entnahmestellen aufweisen, die ein Grundgerüst aus Profilen aufweisen, wobei Datenanschlussstellen oder die Entnahmestellen für medizinische Gase und elektrischen Strom mit speziellen Halteblechen in dem Grundgerüst befestigt sind. Die Grundkörper der Entnahmestellen werden dann mit Hilfe von Abdeckplatten, die mit den entsprechenden Öffnungen für die spezifische Konfiguration der Entnahmestellen angefertigt werden, abgedeckt. Diese Platten werden in der Regel mit Hilfe von Schrauben an dem Grundgerüst befestigt.

Die Offenlegungsschrift FR-A-2 614 736 zeigt weiterhin eine medizinische Versorgungseinheit, die einen Träger mit einem Innenraum aufweist, wobei der Träger mehr als drei Langkanten und dazwischenliegende Langflächen aufweist. In einer der Langflächen weist der Träger Öffnungen auf, und auf der Innenseite der Langfläche neben den Öffnungen an zwei gegenüberliegenden Seiten sind Profilstege vorgesehen. In die Profilstege sind Hilfsrahmen für Entnahmestellen formschlüssig eingesetzt.

Das Prinzip dieses Aufbaus bringt aber den Nachteil mit sich, dass die Konfiguration und die Anordnung der Entnahmestellen festgelegt sind. Eine nachträgliche Veränderung der Position oder Hinzunahme oder Weglassen von Entnahmestellen erfordert immer die Anfertigung einer neuen Abdeckplatte, so dass der Aufwand für nachträgliche Veränderungen groß wird. Auch die Montage ist nicht optimal zu gestalten, da keine vorgefertigten Module in den Träger der medizinischen Versorgungseinheit eingebaut werden können, sondern die Einzelteile jeweils sukzessive in den jeweiligen Träger eingebaut werden müssen, was jeweils durch aufwendige Arbeitsschritte geschieht, da die Baugruppen und Bauteile einzeln in den Träger geschraubt werden müssen.

Es ist Aufgabe der Erfindung, diese Probleme zu lösen. Insbesondere ist es Aufgabe der Erfindung, eine medizinische Versorgungseinheit bereitzustellen, die es ermöglicht, modulare, vorgefertigte Baugruppen in einfacher Weise in die medizinische Versorgungseinheit einzubauen, und die eine große Flexibilität in der Anordnung der Baugruppen erlaubt.

Diese Aufgabe wird durch die Vorrichtung gemäß Anspruch 1 gelöst. Vorteilhafte Weiterentwicklungen sind Gegenstand der abhängigen Ansprüche.

Gemäß einem Aspekt der Erfindung weist die medizinische Versorgungseinheit einen Träger mit mindestens drei Langkanten, mindestens drei Langflächen und einem Innenraum auf. Mindestens eine der Langflächen ist mit mindestens einer Öffnung versehen, und an mindestens zwei Seiten der Öffnung ist mindestens ein federndes Befestigungselement vorgesehen, das in Richtung der Öffnung ragt.

Die Erfindung wird anhand eines Ausführungsbeispiels unter Bezugnahme auf die begleitenden Figuren beschrieben.
- Fig. 1: ist eine isometrische Ansicht eines Ausführungsbeispiels der erfindungsgemäßen medizinischen Versorgungseinheit als Deckenstativ.
- Fig. 2: zeigt eine isometrische Ansicht auf eine Langfläche des Trägers mit einem herausgenommenen Einbaumodul.
- Fig. 3: ist ein horizontaler Schnitt durch einen Bereich des Trägers.
- Fig. 3a: zeigt eine vergrößerte Detailansicht des Bereichs des Trägers von Fig. 3 mit der Klipverbindung zwischen dem federnden Befestigungselement im Eingriff mit dem Einbaumodul.
- Fig. 4: zeigt einen vertikalen Schnitt durch einen Abschnitt des Trägers.

Im Folgenden wird der Gesamtaufbau eines Ausführungsbeispiels einer erfindungsgemäßen medizinischen Versorgungseinheit überblicksweise beschrieben.

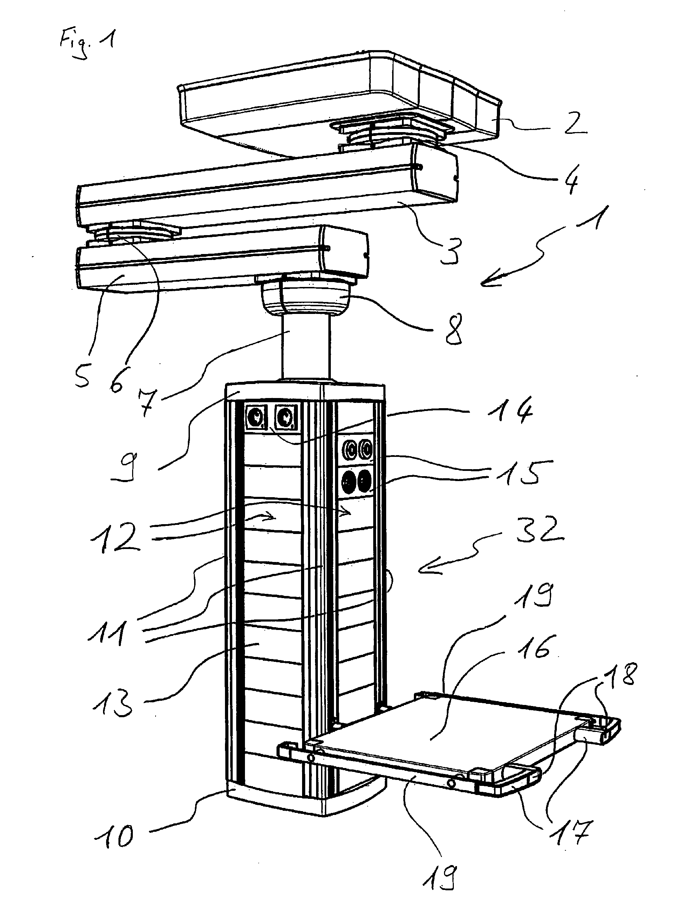

Fig. 1 zeigt eine isometrische Ansicht einer medizinischen Versorgungseinheit 1. Die medizinische Versorgungseinheit 1 weist eine Deckenbefestigung auf, die von einer Deckenverkleidung 2 abgedeckt wird. Ein oberer Stativarm 3 ist in Längsrichtung an einem Ende an der Oberseite über ein oberes Drehgelenk 4 mit der Deckenbefestigung verbunden. Am in Längsrichtung gegenüber liegenden Ende des oberen Stativarms 3 ist dieser an dessen Unterseite mittels eines mittleren Drehgelenks 6 mit einem unteren Stativarm 5 verbunden. Das mittlere Drehgelenk 6 ist in Längsrichtung des unteren Stativarms 5 an einem Ende angeordnet. Am in Längsrichtung dem mittleren Drehgelenk 6 gegenüberliegenden Ende des unteren Stativarms 5 ist an dessen Unterseite ein unteres Drehgelenk 8 angeordnet, das wiederum mit einer Distanzsäule 7 verbunden ist. Am unteren Ende der Distanzsäule 7 ist ein oberer Abschlussdeckel 9 befestigt. Der obere Abschlussdeckel 9, ein unterer Abschlussdeckel 10 und dazwischen liegende Elemente bilden einen Träger 32.

Der Träger 32 ist in diesem Ausführungsbeispiel quaderförmig gestaltet und weist vier Langkanten 11 und vier dazwischen liegende Langflächen 12 auf. In alternativen Ausführungsformen sind auch Träger mit drei, fünf oder mehreren Langkanten und Langflächen möglich. Die grundsätzliche Form ist dann nicht quaderförmig, sondern zylindrisch mit einem geeigneten Querschnitt. Auch können in anderen Ausführungsformen medizinische Versorgungseinheiten mit mehreren Trägern vorgesehen sein.

Ein Teil der Langflächen 12 wird durch Einbaumodule 13 gebildet. Die Einbaumodule 13 sind so übereinander angeordnet, dass sie nahezu spaltfrei eine durchgehende Fläche bilden, die sich von dem oberen Abschlussdeckel 9 bis zu dem unteren Abschlussdeckel 10 erstreckt. Die Einbaumodule 13 sind an den vier Seiten des Trägers 32 vorgesehen. Die Einbaumodule 13 sind als reine Abdeckmodule ohne Einbauten, oder als Elektro-Einbaumodul 14 mit eingebauten Elektrosteckdosen zur Stromversorgung von medizinischen Apparaten, oder als Gas-Einbaumodule 15 mit Gasentnahmestellen oder Manometern, die zur Versorgung der medizinischen Apparate mit medizinischen Gasen dienen, gestaltet.

An der in Fig. 1 gezeigten rechten Seite des Trägers 32 ist eine Plattform 16 zum Aufstellen oder Befestigen von medizinischen Apparaten oder Instrumenten angebracht. Die Plattform 16 ist mit Bediengriffen 17 ausgestattet, in denen Bedienelemente 18 vorgesehen sind. Die Bedienelemente 18 dienen zur Ansteuerung von Aktoren der medizinischen Versorgungseinheit, z. B. ansteuerbaren Bremsen in den Drehgelenken 4, 6 und 8. Seitlich der Plattform 16 erstrecken sich Schienen 19. Die Schienen 19 dienen zur Aufnahme von weiteren medizinischen Apparaten oder Zubehör.

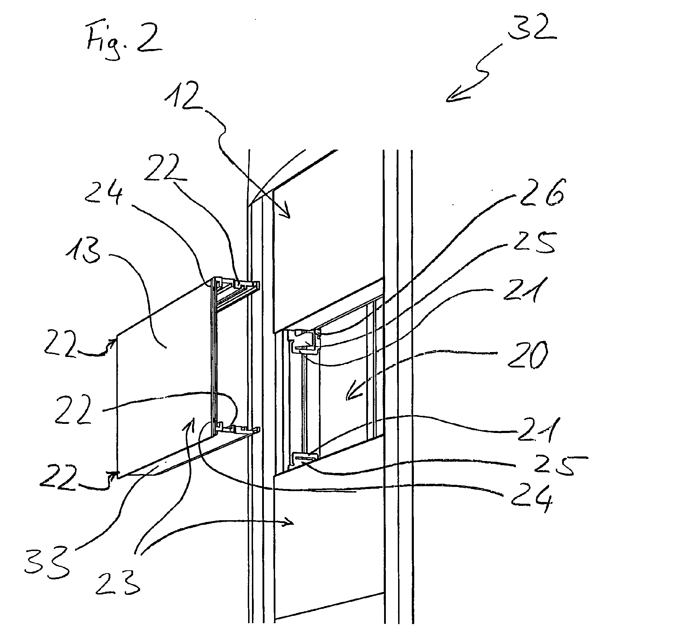

In Fig. 2 ist eine der Langflächen 12 des Trägers 32 der medizinischen Versorgungseinheit in einer isometrischen Ansicht dargestellt, wobei ein Einbaumodul 13 in einem nicht montierten Zustand gezeigt ist. Der Träger 32 weist in seiner Langfläche 12 eine Öffnung 20 auf. An den beiden Seiten der Öffnung 20 sind federnde Befestigungselemente 21 vorgesehen, die mit dem Träger 32 verbindbar sind. In dem vorliegenden Ausführungsbeispiel sind für jedes Einbaumodul 13 jeweils zwei federnde Befestigungselemente 21 vorgesehen. In anderen Ausführungsformen kann aber auch jeweils nur ein federndes Befestigungselement 21 seitlich des Einbaumoduls 13 vorgesehen sein. Zusätzlich oder alternativ können auch Befestigungselemente an der Ober- oder Unterseite des Einbaumoduls 13 vorgesehen sein.

Die federnden Befestigungselemente 21 sind in diesem Ausführungsbeispiel als separate Bauteile vorgesehen. Alternativ können auch die Profile des Trägers 32 so ausgebildet sein, dass die federnden Befestigungselemente 21 bereits darin integriert sind. Die federnden Befestigungselemente weisen jeweils zwei federnde Abschnitte 25 auf, von denen jeweils einer an dem oberen Befestigungselement 21 und einer an dem unteren Befestigungselement 21 innerhalb der Öffnung 20 gezeigt ist. Um die Haltekraft zu erhöhen, können alternativ aber auch mehrere federnde Abschnitte 25 vorgesehen sein. Weiterhin weist das federnde Befestigungselement 21 einen nicht federnden Abschnitt 26 auf. Der nicht federnde Abschnitt 26 dient als vertikale Führung für die Montage der Einbaumodule 13. Es können auch mehrere nicht federnde Abschnitte 26 vorgesehen sein. Das federnde Befestigungselement 21 ist in diesem Ausführungsbeispiel aus Federstahl angefertigt, es können aber auch jegliche andere geeignete Materialien verwendet werden.

Das Einbaumodul 13 weist eine Frontfläche 23 auf, die im eingebauten Zustand gemeinsam mit den Frontflächen 23 der weiteren Einbaumodule 13 einen Teil der Langfläche 12 bildet. An der Oberseite und an der Unterseite des Einbaumoduls 13 ist auf der gegenüberliegenden Seite der Frontfläche 23 jeweils ein auskragendes Element 33 vorgesehen. Die auskragenden Elemente 33 sind an ihren Seiten 22 zur Befestigung der Einbaumodule 13 wie nachstehend beschrieben geformt. Die Frontfläche 23 ist seitlich jeweils mit einem vertieften Absatz geformt, in denen an beiden Seiten jeweils zwei Durchbrüche 24 vorgesehen sind. Die Durchbrüche 24 sind geeignet, um ein spezielles Werkzeug zum Lösen der Einbaumodule 13 im eingebauten Zustand zu den federnden Befestigungselementen 21 eindringen zu lassen. In anderen Ausführungsformen ist auch nur ein Durchbruch oder sind mehrere Durchbrüche möglich.

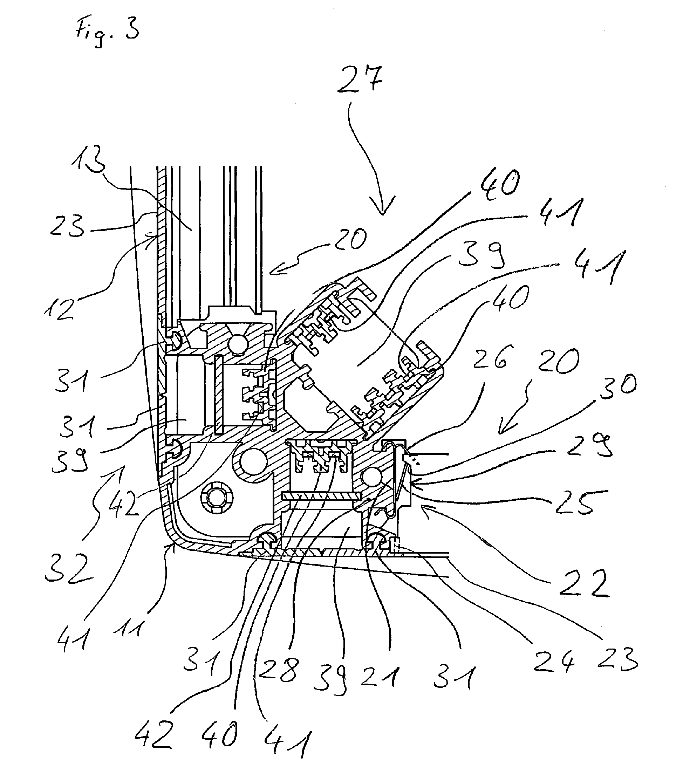

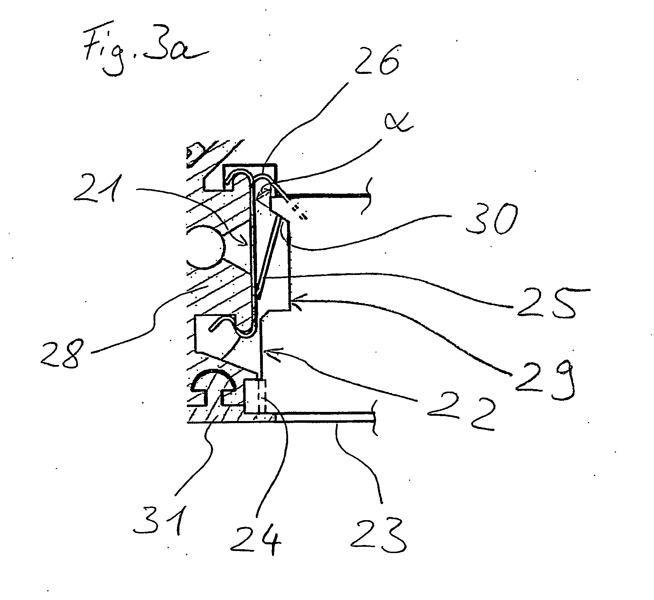

Ein horizontaler Schnitt durch einen Bereich des Trägers 32 ist in Fig. 3 gezeigt. An die Langkante 11 grenzen in dieser Darstellung jeweils zwei Langflächen 12, die durch einen Abschnitt eines Profils 28, Abdeckvorrichtungen 31 und den Frontflächen 23 der Einbaumodule 13 gebildet werden. Durch die Profile 28 und die Einbaumodule 13 wird ein Innenraum 27 gebildet.

Das Profil 28 weist drei Hohlschienen 39 mit jeweils darin vorgesehenen Isolierschienen 40 mit Leiterschienen 41 auf. In die äußeren Hohlschienen 39 sind jeweils zusätzlich Befestigungsschienen 42 eingebracht. Die Hohlschienen 39 werden aus hygienischen Gründen durch die Abdeckvorrichtungen 31 abgedeckt, um ein Eindringen von Flüssigkeiten in die Hohlschienen 39 zu vermeiden. Die Leiterschienen 41 in den nach außen gerichteten Hohlschienen 39 dienen zur Übertragung von Steuersignalen zum Betrieb der medizinischen Versorgungseinheit 1, und ggf. zur Ansteuerung von daran vorgesehenen medizinischen Apparaten. Die Leiterschienen, die in Richtung des Innenraums 27 gerichtet sind, dienen zum einen zur Datenübertragung zum Betrieb der medizinischen Versorgungseinheit, und zum anderen zur Versorgung von Elektrosteckdosen oder sonstigen elektrischen Einrichtungen der medizinischen Versorgungseinheit 1.

In Fig. 3a ist detailliert gezeigt, wie das Profil 28 jeweils in zwei Bereichen, die den Einbaumodulen 13 zugewandt sind, eine Ausgestaltung mit zwei gegenüberliegenden Rippen aufweist, die dazu geeignet sind, dass das federnde Befestigungselement 21 aufgeschnappt werden kann. Dabei wird in Einbaulage in horizontaler Richtung ein Formschluss und in vertikaler Richtung ein Kraftschluss erzeugt, wodurch das federnde Befestigungselement 21 in jeder beliebigen Höhe montiert werden kann. Das Profil 28 kann in einer alternativen Ausführungsform aber auch so ausgeführt sein, dass in vertikaler Richtung ebenfalls ein Formschluss vorliegt.

Das Einbaumodul 13 weist, wie in Fig. 3 und Fig. 3a von oben betrachtet, eine bestimmte Kontur auf. Die Seiten 22 des Einbaumoduls 13 sind so gestaltet, dass entlang ihrer Erstreckung in Richtung des Innenraums 27 in einem Bereich eine Vertiefung 29 angeordnet ist. Die Vertiefung 29 weist an der Seite, die von der Frontfläche 23 weiter entfernt ist, eine Verriegelungsfläche 30 auf. Die Verriegelungsfläche 30 ist so gestaltet, dass sie mit der Seite 22 einen Winkel α einschließt, der kleiner als 90° ist. In einer alternativen Ausführung kann an Stelle der Vertiefung 29 auch eine Öffnung vorgesehen, die ebenfalls eine Verriegelungsfläche 30 wie oben beschrieben aufweist.

Der nicht federnde Abschnitt 26 des federnden Befestigungselements 21 ragt, ausgehend von dem Profil 28, in Richtung der Öffnung 20, die durch das Einbaumodul 13 verschlossen wird. Bei einem eingebauten Einbaumodul 13 überschneidet sich der nicht federnde Abschnitt 26 mit der Kontur des Einbaumoduls 13. Durch eine geeignete vertikale Positionierung der federnden Befestigungselemente 21 dient der nicht federnde Abschnitt 26 somit als Führung in vertikaler Richtung für die Einbauelemente 13, da die Einbauelemente 13 auf dem nicht federnden Abschnitt 26 aufliegen.

Beim Einbau der Einbauelemente 13 wird der federnde Abschnitt 25 des federnden Befestigungselements 21 durch die Kontur des Einbauelements 13 zurückgedrückt, und bei einem weitere Einschieben des Einbauelements 13 des federnden Befestigungselements 21 gelangt der federnde Abschnitt 25 in einen formschlüssigen Eingriff mit dem Einbauelement 13, da der federnde Abschnitt 25 beim Zurückfedern während des Einbauvorgangs des Einbaumoduls 13 mit seiner Stirnseite in die Vertiefung 29 an der Verriegelungsseite 30 eingreift und das Einbaumodul 13 dabei verriegelt. Die Länge des federnden Abschnitts 25 ist dabei so ausgelegt, dass der Berührpunkt zwischen dem federnden Abschnitt 25 und der Verriegelungsfläche 30 etwa in der Mitte der Verriegelungsfläche 30 liegt. Somit kann bei einem Auftreten von Form- und Lagetoleranzen des Profils 28, des federnden Befestigungselements 21 und des Einbaumoduls 13, ein spielfreier Einbau des Einbauelements 13 gewährleistet werden. Der Winkel α und die Entfernung der Verriegelungsfläche 30 von der Frontfläche 23 ist so gewählt, dass auch bei maximalen oder minimalen Werten in der Toleranzkette, der federnde Abschnitt 25 immer im Eingriff mit der Verriegelungsfläche 30 ist.

Die Durchbrüche 24 sind so angeordnet, dass nach einem Entfernen oder Wegdrücken der Abdeckvorrichtung 31 ein Zugang für ein spezielles Werkzeug ermöglicht wird, mit dem der federnde Abschnitt 25 in Richtung des Profils 28 gedrückt werden kann. Dabei wird der Eingriff zwischen dem federnden Abschnitt 25 und der Verriegelungsseite 30 aufgehoben und das Einbaumodul 13 wird entriegelt und kann aus dem Träger 32 herausgezogen werden. Günstigerweise ist das Werkzeug so gestaltet, dass es beim Eindrücken in Richtung des Innenraums 27 den federnden Abschnitt 25 zurückdrückt, und bei einem Zurückziehen des Werkzeugs das Einbaumodul 13 aus der Öffnung 20 automatisch herauszieht. Nur das Zurückdrücken des federnden Abschnitts 25 ohne das automatische Herausziehen kann auch mit Hilfe eines konventionellen Werkzeugs, wie z.B. eines Schraubendrehers oder eines Stifts erfolgen.

Nach dem Einbau der Einbaumodule 13 werden die Durchbrüche 24 durch die Abdeckvorrichtungen 31 abgedeckt, um die hygienischen Bedingungen zu verbessern.

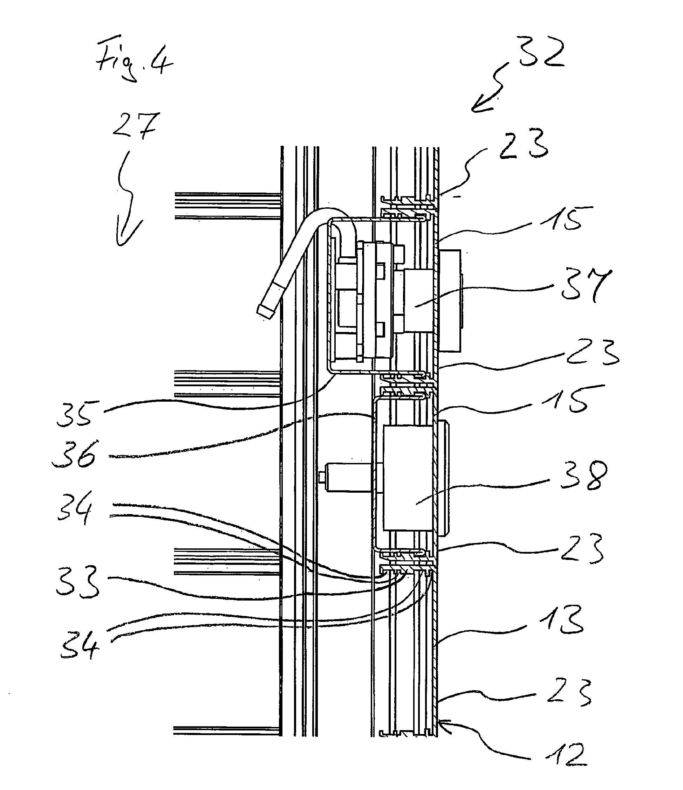

In Figur 4 ist ein vertikaler Schnitt durch einen Abschnitt des Trägers 32 gezeigt. In der Darstellung rechts sind die Frontflächen 23 der einzelnen Einbaumodule 13 dargestellt, die einen Teil der Langfläche 12 bilden. Die Einbaumodule 13 haben an den oberen Enden der seitlichen Kontur von der Frontfläche 23 ausgehend jeweils einen rechtwinkligen vertieften Absatz. An der Unterseite der Frontflächen 23 ist die seitliche Kontur der Einbaumodule 13 jeweils mit einem Vorsprung nach unten versehen, der komplementär zu den Absätzen an deren Oberseite ausgebildet ist. Durch diese Ausgestaltung ergibt sich ein Ineinandergreifen der Absätze und der Vorsprünge, das vermeidet, dass Flüssigkeiten, die entlang der Frontfläche 23 herunter laufen in den Träger 32 eindringen können. Durch den überlappenden unteren Abschnitt der Frontfläche über den Absatz am oberen Ende der Frontfläche 23 wird die Bildung eines nach innen durchgehenden Spalts zwischen den Einbaumodulen 13 verhindert, so dass auch bei einem Auftreten von Toleranzen das Eindringen der Flüssigkeiten verhindert wird.

Die Wangen, die die auskragenden Elemente 33 auf der der Frontseite 23 gegenüber liegenden Seite bilden, sind mit mehreren Nuten 34, die verschiedene Breiten aufweisen, versehen. Die Nuten 34 der oberen Wange 33 und die Nuten 34 der unteren Wange 33 sind jeweils gegenüberliegend angeordnet. In alternativen Ausführungsformen können die Anzahl der Nuten 34 abweichen sein, und die Breiten der Nuten 34 anders ausgeführt sein. Die Wangen 33 mit den Nuten 34 dienen als Befestigungsmittel für Anbauteile auf der der Frontfläche 23 gegenüber liegenden Seite.

In die in der Fig. 4 gezeigten Gas-Einbaumodule 15 sind jeweils Gassteckdosen 37 oder Manometer 38 eingebaut. Die Gassteckdosen 37 oder Manometer 38 werden mit Hilfe von Anbauteilen in Form von Befestigungsprofilen 35, 36 an dem Gas-Einbaumodul 15 befestigt. Das Befestigungsprofil 35, 36 weist im Wesentlichen eine U-förmige Kontur auf, wobei der geschlossene Schenkel des liegenden U's in Richtung des Innenraums 27 des Trägers 32 zeigt. An den beiden dem geschlossenen Bereich gegenüber liegenden Enden der U-förmigen Kontur sind die Enden der Schenkel um 180° umgebogen. Sie bilden damit Eingriffselemente auf der Außenseite der Befestigungsprofile 35, 36. Die Abmessungen des Befestigungsprofils 35 sind von der Art und den Befestigungsmöglichkeiten der Gassteckdosen und Manometer abhängig. Die Befestigungsprofile können in der Tiefe, in der Breite, und in der Kontur variieren. In Abhängigkeit von der Befestigungsart der Gassteckdose kann das Befestigungsprofil entweder in der Orientierung wie in Fig. 4 gezeigt eingebaut sein, oder um 180° gedreht, so dass sich der geschlossene Bereich des Profils in Fig. 4 rechtsseitig befindet. Im Extremfall ist das Befestigungsprofil auf eine Befestigungsplatte reduziert. Die an den Befestigungsprofilen 35, 36 gebildeten Eingriffselemente bzw. die Befestigungsplatte werden jeweils in die Nuten 34, die als Befestigungsmittel in verschiedenen Abständen zur Frontfläche 23 vorgesehen sind, eingeschoben.

Die Befestigung von Elektrosteckdosen in Elektroeinbaumodulen 14 erfolgt grundsätzlich in der gleichen Art und Weise. Abhängig von der Art und der Befestigungsmöglichkeit der Elektrosteckdosen und Gassteckdosen oder Manometer, ist auch eine direkte Befestigung an der vorderen Platte, die die Frontfläche 23 bildet, möglich.

Die Gassteckdosen und Manometer werden über nicht gezeigte Schläuche oder Rohre mit der zentralen Gasversorgungsanlage verbunden. Die Elektrosteckdosen werden an den in Fig. 3 gezeigten Leiterschienen 41 angeschlossen oder alternativ mit dem Versorgungsnetz direkt verdrahtet.

Die Abmessung der Einbaumodule 13 in vertikaler Richtung, also deren Höhe, ist so gewählt, dass ausgehend davon die weiteren Höhenabmessungen jeweils ein ganzzahliges Vielfaches davon betragen. Somit können einzelne Module leicht ausgewechselt werden oder eine Mehrzahl von Modulen durch ein Modul mit einer größeren Abmessung ersetzt werden, wobei die Frontfläche 23 nicht unterbrochen wird.

Das Austauschen von Modulen, um die jeweiligen Entnahmestellen in die Nähe der medizinischen Apparate anzuordnen, so dass die Versorgungsleitungen möglichst kurz ausgeführt werden können, ist hier leicht möglich. Bei einer Veränderung der benötigten Konfiguration der Entnahmestellen ist auch ein Nachrüsten von Gassteckdosen, Elektrosteckdosen oder Datenanschlüssen leicht möglich, ohne ganze Abdeckplatten neu anzufertigen und einen hohen Montageaufwand aufbringen zu müssen.

Bei der Erstmontage werden die federnden Befestigungselemente 21 mit Hilfe einer Vorrichtung so an das Profil 28 angeklipst, dass die federnden Befestigungselemente 21 einen Abstand zueinander und ebenso von dem oberen Abschlussdeckel 9 und dem unteren Abschlussdeckel 10 aufweisen, so dass die Einbaumodule 13 entsprechend ihren Höhenabmessungen angeklipst werden können. Damit werden eventuell auftretende kleine Spalte, die durch Toleranzen entstehen können, über die ganze Frontfläche 23 verteilt, so dass nicht an einem Ende der Frontfläche 23 ein größerer Spalt entsteht.

## Patentansprüche

1. Medizinische Versorgungseinheit (1), aufweisend einen Träger (32), wobei
der Träger (32) mindestens drei Langkanten (11), mindestens drei Langflächen (12) und einen Innenraum (27) aufweist, und
mindestens eine Öffnung (20) in mindestens einer Langfläche (12) aufweist, wobei die Öffnung (20) durch ein Einbaumodul (13) verschließbar ist, **dadurch gekennzeichnet, dass**
der Träger (32) so ausgebildet ist, dass er an mindestens zwei Seiten der Öffnung (20) jeweils mindestens ein federndes Befestigungselement (21) aufweist, das in Richtung der Öffnung (20) ragt, und dass
ein federnder Abschnitt (25) des federnden Befestigungselements (21) so ausgebildet ist, dass er in einen formschlüssigen Eingriff mit dem Einbaumodul (13) bringbar ist.

2. Medizinische Versorgungseinheit (1) gemäß Anspruch 1, **dadurch gekennzeichnet, dass** das federnde Befestigungselement (21) ein separates Bauteil ist, das mit dem Träger (32) verbindbar ist.

3. Medizinische Versorgungseinheit (1) gemäß Anspruch 2, **dadurch gekennzeichnet, dass** der Träger (32) und das federnde Befestigungselement (21) so ausgebildet sind, dass sie in eine Richtung eine formschlüssige Verbindung eingehen.

4. Medizinische Versorgungseinheit (1) gemäß einem der Ansprüche 1 bis 3, **dadurch gekennzeichnet, dass** das federnde Befestigungselement (21) mindestens einen federnden Abschnitt (25) als Verriegelungselement und mindestens einen nicht federnden Abschnitt (26) als Führung aufweist, die jeweils in Richtung der Mitte der Öffnung (20) ragen.

5. Medizinische Versorgungseinheit (1) gemäß einem der Ansprüche 2 bis 4, **dadurch gekennzeichnet, dass** das federnde Befestigungselement (21) aus Federstahl angefertigt ist.

6. Medizinische Versorgungseinheit (1) gemäß einem der Ansprüche 1 bis 5, enthaltend das Einbaumodul (13), das dazu geeignet ist in den Träger (32) eingesetzt zu werden, wobei das Einbaumodul (13) aufweist:
eine Frontfläche (23), die daran angepasst ist, in einem Zustand in dem das Einbaumodul (13) in dem Träger (32) eingesetzt ist, einen Teil der Langfläche (12) zu bilden,
mindestens zwei an der Frontfläche (23) angrenzende gegenüberliegende Seiten (22), die so angepasst sind, dass mindestens ein federndes Befestigungselement (21) so in die Seiten (22) eingreift, dass eine formschlüssige Verbindung zwischen dem Träger (32) bzw. dem Befestigungselement (21) und dem Einbaumodul (13) vorhanden ist,
**dadurch gekennzeichnet, dass**
an dem oberen Ende der seitlichen Kontur des Einbaumoduls (13), von der Frontfläche (23) ausgehend, ein rechtwinkliger vertiefter Absatz vorgesehen ist, und
die seitliche Kontur an der Unterseite der Frontfläche (23) mit einem Vorsprung nach unten versehen ist, der komplementär zu dem Absatz an dem oberen Ende ausgebildet ist.

7. Medizinische Versorgungseinheit (1) gemäß Anspruch 6, **dadurch gekennzeichnet, dass** die Seiten (22) eine Vertiefung (29) oder Öffnung aufweisen, die eine von der Frontfläche (23) entfernte Verriegelungsfläche (30) aufweist, die mit der Seite des Einbaumoduls (13) einen Winkel (α) einschließt, der kleiner als 90° ist.

8. Medizinische Versorgungseinheit (1) gemäß einem der Ansprüche 6 oder 7, **dadurch gekennzeichnet, dass** die Frontfläche (23) in einem seitlichen, vertieften Absatz der Frontfläche (23) mindestens einen Durchbruch (24) aufweist, der eine Größe und eine Position aufweist, die dazu geeignet ist, ein Werkzeug eindringen zu lassen, um den Eingriff des federnde Befestigungselement (21) aufzuheben.

9. Medizinische Versorgungseinheit (1) gemäß einem der Ansprüche 6 bis 8, **dadurch gekennzeichnet, dass** das Einbaumodul (13) auf der der Frontfläche (23) gegenüberliegenden Seite Befestigungsmittel (34) für Anbauteile (35, 36) aufweist.

10. Medizinische Versorgungseinheit (1) gemäß Anspruch 9, **dadurch gekennzeichnet, dass** das Einbaumodul (13) auskragende Elemente (33) aufweist und die Befestigungsmittel (34) an den auskragenden Elementen (33) angeordnet sind.

11. Medizinische Versorgungseinheit (1) gemäß Anspruch 10, **dadurch gekennzeichnet, dass** das auskragende Element (33) mehrere Befestigungsmittel (34) in verschiedenen Abständen zur Frontfläche (23) aufweist.

12. Medizinische Versorgungseinheit (1) gemäß einem der Ansprüche 9 bis 11, **dadurch gekennzeichnet, dass** das Anbauteil (35, 36) als ein Befestigungsprofil für Gas- oder Elektrosteckdosen (37) ausgebildet ist.

13. Medizinische Versorgungseinheit (1) gemäß einem der Ansprüche 9 bis 11, **dadurch gekennzeichnet, dass** das Anbauteil (35, 36) als eine Befestigungsplatte für Gas- oder Elektrosteckdosen (37) ausgebildet ist.

14. Medizinische Versorgungseinheit (1) gemäß Anspruch 8 oder Anspruch 8 und einem der Ansprüche 9 bis 13, **dadurch gekennzeichnet, dass**
der Träger (32) eine Abdeckvorrichtung (31), vorzugsweise eine Lippe aus elastischem Material, aufweist, die den Durchbruch (24) zum Aufheben des Eingriffs des federnden Befestigungselements (21) verschließt.

## Claims

1. Medical supply unit (1) comprising a carrier (32), wherein
the carrier (32) comprises at least three longitudinal edges (11), at least three longitudinal faces (12) and an internal space (27), and
it comprises at least one opening (20) in at least one longitudinal face (12), wherein the opening (20) is closable by a built-in module (13), **characterized in**
**that** the carrier (32) is formed such that it respectively comprises at least one resilient fixing element (21) protruding towards the opening (20) at at least two faces of the opening (20), and
**that** a resilient portion (25) of the resilient fixing element (21) is formed such that it is able to be brought into a positive engagement with the built-in module (13).

2. Medical supply unit (1) according to claim 1, **characterized in that**
the resilient fixing element (21) is a separate element which is connectable to the carrier (32).

3. Medical supply unit (1) according to claim 2, **characterized in that**
the carrier (32) and the resilient fixing element (21) are formed such that they have a positive connection in one direction.

4. Medical supply unit (1) according to any of the claims 1 to 3, **characterized in that**
the resilient fixing element (21) comprises at least one resilient portion (25) as a locking element and at least one non-resilient portion (26) as a guide which respectively protrude towards the center of the opening (20).

5. Medical supply unit (1) according to any of the claims 2 to 4, **characterized in that**
the resilient fixing element (21) is made of spring steel.

6. Medical supply unit (1) according to any of the claims 1 to 5, including the built-in module (13) which is suitable for being inserted into the carrier (32), wherein the built-in module (13) comprises:
a front face (23) adapted to form a part of the longitudinal face (12) in a condition in which the built-in module (13) is inserted into the carrier (32),
at least two opposite faces (22), adjacent to the front face (23), which are adapted such that at least one resilient fixing element (21) engages with the faces (22) such that a positive connection is provided between the carrier (32) or the fixing element (21) and the built-in module (13),
**characterized in that**,
starting from the front face (23), a rectangular recessed step is provided at the upper end of the lateral contour of the built-in module (13), and
the lateral contour at the lower side of the front face (23) is provided with a downward protrusion which is formed in a complementary manner with respect to the step at the upper end.

7. Medical supply unit (1) according to claim 6, **characterized in that**
the faces (22) comprise a recess (29) or an opening which comprises a locking face (30), distant from the front face (23), which encloses an angle (α) smaller than 90° with the face of the built-in module (13).

8. Medical supply unit (1) according to any of the claims 6 or 7, **characterized in that**
in a lateral recessed step of the front face (23), the front face (23) comprises at least one opening (24) having a size and a position which is suitable for allowing a tool to penetrate in order to release the engagement of the resilient fixing element (21).

9. Medical supply unit (1) according to any of the claims 6 to 8, **characterized in that**
the built-in module (13) comprises fixing means (34) for attachments (35, 36) at the side opposite to the front face (23).

10. Medical supply unit (1) according to claim 9, **characterized in that**
the built-in module (13) comprises protruding elements (33) and the fixing means (34) are arranged at the protruding elements (33).

11. Medical supply unit (1) according to claim 10, **characterized in that**
the protruding element (33) comprises several fixing means (34) at different distances from the front face (23).

12. Medical supply unit (1) according to any of the claims 9 to 11, **characterized in that**
the attachment (35, 36) is formed as to be a fixing profile for gas outlets or electrical outlets (37).

13. Medical supply unit (1) according to any of the claims 9 to 11, **characterized in that**
the attachment (35, 36) is formed as to be a fixing plate for gas outlets or electrical outlets (37).

14. Medical supply unit (1) according to claim 8 or claim 8 and any of the claims 9 to 13, **characterized in that**
the carrier (32) comprises a covering device (31), preferably a lip of elastic material, which closes the opening (24) for terminating the engagement of the resilient fixing element (21).

## Revendications

1. Unité d'alimentation médicale (1), comprenant un support (32),
le support (32) comprenant au moins trois arêtes longitudinales (11), au moins trois surfaces longitudinales (12) et un espace intérieur (27), et
au moins une ouverture (20) dans au moins une surface longitudinale (12), l'ouverture (20) pouvant être fermée par un module encastrable (13), **caractérisée en ce que**
le support (32) est conçu de sorte qu'il présente sur au moins deux faces de l'ouverture (20) à chaque fois au moins un élément de fixation à ressort (21) qui fait saillie en direction de l'ouverture (20), et **en ce que**
une section à ressort (25) de l'élément de fixation à ressort (21) est conçue de sorte qu'elle peut être amenée en contact par coopération de formes avec le module encastrable (13).

2. Unité d'alimentation médicale (1) selon la revendication 1, **caractérisée en ce que** l'élément de fixation à ressort (21) est un élément séparé qui peut être relié au support (32).

3. Unité d'alimentation médicale (1) selon la revendication 2, **caractérisée en ce que** le support (32) et l'élément de fixation à ressort (21) sont conçus de sorte qu'ils établissent une liaison par coopération de formes dans une direction.

4. Unité d'alimentation médicale (1) selon l'une quelconque des revendications 1 à 3, **caractérisée en ce que** l'élément de fixation à ressort (21) comprend au moins une section à ressort (25) faisant office d'élément de verrouillage et au moins une section non à ressort (26) faisant office de guidage, qui font respectivement saillie en direction du centre de l'ouverture (20).

5. Unité d'alimentation médicale (1) selon l'une quelconque des revendications 2 à 4, **caractérisée en ce que** l'élément de fixation à ressort (21) est fait d'un acier à ressorts.

6. Unité d'alimentation médicale (1) selon l'une quelconque des revendications 1 à 5, contenant le module encastrable (13) qui est adapté à être inséré dans le support (32), le module encastrable (13) comprenant :
une surface avant (23), qui est adaptée à former une partie de la surface longitudinale (12) dans un état dans lequel le module encastrable (13) est inséré dans le support (32),
au moins deux faces (22) opposées adjacentes à la surface avant (23), qui sont adaptées de sorte qu'au moins un élément de fixation à ressort (21) se loge dans les faces (22), de sorte qu'une liaison par coopération de formes est présente entre le support (32) ou l'élément de fixation (21) et le module encastrable (13),
**caractérisée en ce que**
un retrait creusé rectangulaire est ménagé à l'extrémité supérieure du contour latéral du module encastrable (13), à partir de la surface avant (23), et
le contour latéral est pourvu vers le bas, au niveau de la face inférieure de la surface avant (23), d'une saillie qui est complémentaire du retrait à l'extrémité supérieure.

7. Unité d'alimentation médicale (1) selon la revendication 6, **caractérisée en ce que** les faces (22) présentent un creux (29) ou une ouverture qui comporte une surface de verrouillage (30) distante de la surface avant (23), laquelle surface de verrouillage forme avec la face du module encastrable (13) un angle (α) qui est inférieur à 90°.

8. Unité d'alimentation médicale (1) selon l'une quelconque des revendications 6 ou 7, **caractérisée en ce que** la surface avant (23) présente, dans un retrait latéral creusé de la surface avant (23), au moins un passage (24) qui présente une taille et une position adaptées à l'introduction d'un outil, afin de supprimer le contact avec l'élément de fixation à ressort (21).

9. Unité d'alimentation médicale (1) selon l'une quelconque des revendications 6 à 8, **caractérisée en ce que** le module encastrable (13) présente sur la face opposée à la surface avant (23) des moyens de fixation (34) pour des pièces de montage (35, 36).

10. Unité d'alimentation médicale (1) selon la revendication 9, **caractérisée en ce que** le module encastrable (13) comprend des éléments en saillie (33) et les moyens de fixation (34) sont agencés sur les éléments en saillie (33).

11. Unité d'alimentation médicale (1) selon la revendication 10, **caractérisée en ce que** l'élément en saillie (33) comprend plusieurs moyens de fixation (34) différemment espacés de la surface avant (23).

12. Unité d'alimentation médicale (1) selon l'une quelconque des revendications 9 à 11, **caractérisée en ce que** la pièce de montage (35, 36) est conçue comme un profilé de fixation pour des prises de gaz ou des prises électriques (37).

13. Unité d'alimentation médicale (1) selon l'une quelconque des revendications 9 à 11, **caractérisée en ce que** la pièce de montage (35, 36) est conçue comme une plaque de fixation pour des prises de gaz ou de courant (37).

14. Unité d'alimentation médicale (1) selon la revendication 8 ou selon la revendication 8 et l'une quelconque des revendications 9 à 13, **caractérisée en ce que**
le support (32) comprend un dispositif de recouvrement (31), de préférence une lèvre faite d'un matériau élastique, qui ferme le passage (24) pour supprimer le contact avec l'élément de fixation à ressort (21).
